# EUROPEAN PATENT APPLICATION

(11) **EP 4 234 079 A1**
(43) Date of publication of application: **30.08.2023**
(21) Application number: 22460011.4
(22) Date of filing: 25.02.2022
(51) Int. Cl.: B01J 19/26, B01J 4/00, B01J 19/18

(54) **AERODYNAMIC MULTI-PHASE REACTOR**

(71) Applicant: KMB Catalyst Spolka z o.o., 43-175 Wyry (PL)
(72) Inventor: Szajna, Ernest, 45-510 PODWARPIE (PL); Bielecki, Zdzislaw, 44-153 SMOLNICA (PL); Ochowiak, Marek, 62-025 KOSTRZYN (PL)
(74) Representative: Karczmitowicz, Teresa Ewa

(57) **Abstract**

1. An aerodynamic multi-phase reactor comprises a gas supply part (1), a mixing part (2), and an atomizing chamber (3) placed in the middle. The gas supply part (1) has a gas inlet (1a) and at least one gas outlet (1b). The atomizing chamber (3) is fed with a fluid supplied by a central conduit (4), and is also fed with at least one additional substance supplied by at least one lateral conduit (5). The central conduit (4) ends in the atomizing chamber (3) with a central nozzle (6) whilst each lateral conduit (5) ends in the atomizing chamber (3) with a lateral nozzle (7) placed downstream and close to the central nozzle (6). An outlet opening (3b) of the atomizing chamber (3) is joined with an inlet opening (9a) of a mixing conduit (9) shaped in the mixing part (2). An outlet opening (9b) of the mixing conduit (9) is joined with an upstream inlet hole (10a) of a mixing chamber (10) shaped in the mixing part (2). The gas outlet (1b) of the gas supply part (1) is joined with at least one gas channel (11) shaped in the mixing part (2) and ending in the upstream part (10c) of the mixing chamber (10). The reactor is provided with a catching system (13) of oversized droplets joined with a circumferential groove (10e) shaped in the wall of the downstream part (10d) of the mixing chamber (10) close to a downstream outlet hole (10b).

## Description

The subject of the invention is an aerodynamic multi-phase reactor for two-component and multi-component systems. The invented reactor takes advantage of kinetic energy of the gas stream for atomization and mixing of the fed substances which also may react in the mixture. The resulting gaseous or aerosol products may be collected at an outlet of the claimed device. The invention has applications in the pharmaceutical, food, construction industries, chemical engineering and technology, environmental protection and other fields of technology.

Russian patent RU2730542 (C2) discloses a thermochemical reactor which comprises a flow-through gas-flame air heater and a tubular converter connected to it with an additional Venturi tube in between. The gas-flame air heater is fed with air through axial conduit supplying air into Venturi nozzle. Hydrocarbon fuel is supplied through the nozzles in the converter wall, the nozzles being placed downstream the Venturi tube.

Chinese utility model described in CN2054461 (U) consists of a double-throat channel feeding raw oil nozzle for a petroleum mixing smelting catalytic cracking device. The two throat channels are adopted, and a raw oil inlet is installed on the side of a mixing chamber. Gas-phase speed is increased to increase aerodynamic force. Raw oil drops can be broken into fine particles which are atomized homogeneously well under the action of the aerodynamic force. Liquid-phase speed is increased appropriately to cause the pairwise opposite nozzles which are arranged on the catalytic cracking device to crash up further by the high speed when the nozzles spray oppositely.

A pyrolytic reactor according to American patent application US2016228847 (A1) comprises a fuel injection zone, a combustion zone adjacent to the fuel injection zone, an expansion zone adjacent to the combustion zone, a feedstock injection zone comprising a plurality of injection nozzles and disposed adjacent to the expansion zone, a mixing zone configured to mix a carrier stream and feed material and disposed adjacent to the feedstock injection zone, and a reaction zone adjacent to the mixing zone. The plurality of injection nozzles are radially distributed in a first assembly defining a first plane transverse to the feedstock injection zone and in a second assembly transverse to the feedstock injection zone.

British patent document GB1414524 (A) discloses a reactor burner for combustion of gaseous fuels and flue gases, including exhaust from internal combustion engines, which are burnt in the presence of excess combustion air. The air and gas are fed separately to a reaction chamber which is extended by an exhaust chamber. Combustion air is fed from line through a chamber surrounding the reaction chamber and exhaust chamber whereby it is heated before entering the reaction chamber together with the gas which enters from a gas conduit.

In another British patent document GB911421 (A) a method and device for mixing gases are proposed. Two or more gases (which may be oxygen, and a hydrocarbon as methane, ethane or propane) are discharged through nozzles which form the gases into partial streams of supersonic speed which are mixed in a reactor duct. The reactive gases are supplied under pressure to heaters where they are raised above reaction temperature and pass at subsonic speed through pipes to a mixing nozzle array. They are discharged as partial streams through Venturi-form gas nozzles by which the streams are raised to supersonic speed and lowered below reaction temperature. The parallel partial streams then flow through a mixing duct having a divergent section and a section which is cylindrical or slightly divergent to minimize drag and boundary layer growth, and thence to a reactor having a wedge which creates a strong standing shock wave whereby the gases are raised above reaction temperature. The reaction may be quenched by a spray device or other means, and the products discharged to a subsonic diffuser duct. The two groups of nozzles are closely interspersed and the nozzles may differ in size and number in accordance with the total mass flow rates of the several gases. They may be circular in cross-section, or rectangular. The downstream ends of adjacent nozzles may intersect. The different gases may pass through the mixing duct with differences in velocity not exceeding 10%, producing mild shock waves sufficient to promote mixing but insufficient to cause reaction. The mixing duct has a length 20 to 200 times the largest diameter of the larger nozzles.

Chinese utility model application CN201579045 (U) discloses a riser reactor in a catalytic cracking device. The device consists of a riser reactor, including a riser, a rectifying and pre-lifting section, an oil mixing feed section, and an oil reaction section, which are arranged on one side of the riser. There is a regenerative inclined tube, which is connected to the rectifying and pre-lifting section. The rectifying and pre-lifting section of the riser is provided with a rectifier tube and a pre-lifting medium tube. A number of symmetrically distributed nozzles are arranged in the middle and upper part of the riser. A gas medium pipe for spraying gas medium into the liquid mist area is arranged above each nozzle. The liquid mist area is located in the riser and above the nozzle outlet. The middle and lower channels of the riser have a Venturi structure. The channel is located at the upper part of the rectifying and pre-lifting section, and the angle between the nozzle and the riser is greater than or equal to 35°.

In another Chinese utility model application CN203140198 (U) a sand spraying head is described. It comprises in sequence: an air compression cavity, a plurality of gas nozzles, a mixing cavity, a plurality of mixing pipes and a plurality of diffusion pipes. An inclined sand feeding pipe and a plurality of inclined air intake pipes are arranged outside the mixing cavity. The gas nozzles are placed downstream relative to the outlets of sand pipe and air intake pipes.

American patent US5289976 (A) discloses a nozzle for atomizing heavy feed to a riser reactor. A liquid hydrocarbon feed stream is atomized by radial out-to-in impingement of atomizing vapor, discharged onto an impingement plug in an annular expansion region, then sprayed through an outlet. Baffles at the expansion region outlet, and an orifice outlet improve feed atomization and feed/FCC (fluid catalytic cracking) catalyst contact in a riser reactor.

A modified solution is presented in American patent US5948241 (A). A liquid feed stream is atomized by radial out-to-in impingement of atomizing vapor, discharged onto an imperforate central region of a perforated plate in one end of a nozzle barrel, then sprayed through an outlet in the other end of the nozzle barrel. Preferably two perforate plates are used, a first at one end of the nozzle barrel and a second between the first plate and the outlet, which is preferably an elliptical orifice.

The commonly used designs of reactor-mixers with liquid spraying are limited either by the size of the generated droplets or the maximum viscosity of the sprayed substance, as well as intensity of its stream. In order for the reactor to generate droplets of the assumed average diameter and velocity, pneumatic atomization of the substances fed through internal nozzles with a diameter selected appropriately for the sprayed substance should be used. The outlets of these nozzles must be placed on an axis of the gas nozzle outlet. Diameter of the gas nozzle is selected depending on the speed value required to atomize the substance and the assumed droplet diameter. One may select the flow parameters through the gas nozzle so as to obtain supersonic velocities at its outlet. Such a solution will allow to obtain the droplets size having a median below 1 µm.

An aerodynamic multi-phase reactor according to the invention comprises two main functional sections: a gas supply part, usually tubular in the form of a hollow cylinder, and a mixing part. Both sections may be shaped in one common housing, or they may be separate and firmly joined together, e.g. with a screw connection.

The gas supply part has a gas inlet of large diameter, preferably equal to internal diameter of the tubular part, and it has at least one gas outlet. It also has an atomizing chamber preferably placed axially in the downstream section of the gas supply part, i.e. near the gas outlet through which gas is supplied into the mixing part. It must be noted that the atomizing chamber is not fed with gas flowing through the gas supply part, therefore it can be placed outside the gas supply part as well. The mode of its operation is explained further below.

In preferred embodiment the gas supply part is tubular, and its cross section is circular, but it might be as well elliptical, rectangular, in particular square, and also hexagonal or octagonal, or other. The gas supply part may also be slightly divergent or convergent.

The gas supply part has a rim around the gas inlet which may be used for connecting the claimed reactor with other devices, e.g. a container or a generator of compressed gas. A number of holes may be bored in the rim for making a screw connection between the reactor and the wall or collar of said external device. A sealing gasket should be used then.

The atomizing chamber is fed with fluid, usually a stream of gas supplied by a separate central conduit which is introduced into the gas supply part. In one embodiment this central conduit is placed coaxially within the gas supply part, while in the other embodiment it penetrates the wall of the gas supply part, and turns towards the atomizing chamber. The latter is also fed with at least one additional substance supplied by at least one lateral conduit. The central conduit ends inside the atomizing chamber with a Venturi-type central nozzle, while each lateral conduit ends inside the atomizing chamber with a lateral nozzle placed downstream but close to the central nozzle. The lateral nozzles may be of Venturi-type likewise the central nozzle.

Venturi effect is used in the atomizing chamber. A jet of fluid injected through the central nozzle decreases pressure inside the atomizing chamber, especially close to the lateral nozzle or nozzles, and thus makes the fluid, suspension or powder supplied through the lateral conduits and the lateral nozzles to spray and mix with the central stream of fluid. Advantageously the central jet of fluid has a supersonic speed.

The lateral conduits may be perpendicular to the axis of the gas supply part, but they may be askew as well. The lateral conduits may divide the outlet of the gas supply part into a plurality of adjacent outlets.

The mixing part consists of three main parts: a mixing conduit, one or more gas channels, and a mixing chamber. Obviously, it may additionally comprise other elements if needed to improve its performance or required to provide additional functionalities. Preferably, the gas supply part, the central nozzle in the atomizing chamber, the mixing conduit, and the mixing chamber are arranged coaxially. The gas channels are arranged laterally and askew to the mixing channel.

The atomizing chamber has an outlet opening which is joined with an inlet opening of a mixing conduit shaped inside the mixing part. The role of the mixing conduit is to enable additional substances which are fed into the atomizing chamber through the lateral nozzles to pre-mix with fluid sprayed into the atomizing chamber through the central nozzle.

An outlet opening of the mixing conduit is joined with an upstream inlet hole of a mixing chamber shaped in the mixing part. The gas outlet or outlets of the gas supply part are joined with at least one gas channel shaped in the mixing part. Each gas channel ends in the upstream section of the mixing chamber. In the mixing chamber an aerosol made in the atomizing chamber and pre-mixed in the mixing conduit is further mixed with gas fed from the gas supply part through the gas channels.

Optionally the reactor may have a catching system of oversized droplets which is joined with a downstream end of the mixing chamber. The catching system catches too big droplets, usually of diameter in excess of 0.1 mm, and directs them towards the source of substance which is further fed by one of the lateral conduits through the lateral nozzle into the atomizing chamber. Thus a mixture contained in the oversized droplets is not wasted but is recycled into the reactor instead.

In a preferred embodiment the catching system of oversized droplets is joined with a circumferential groove shaped in the wall of the downstream section of the mixing chamber, close to a downstream outlet hole.

Preferably, the atomizing chamber is placed centrally in the gas supply part, but it may also be placed close to or at the wall of the gas supply part, or even externally. The sprayed mixture of substances leaving the atomizing chamber enters with high speed the mixing conduit which preferably is convergent. The mixing conduit terminates in the mixing chamber, so if the mixing conduit is convergent, the sprayed mixture is further accelerated.

Then, due to the Venturi effect, a pressure in the upstream section of the mixing chamber is decreased. It helps the gas stream transferred from the gas supply part and through the gas channels to enter the mixing chamber, even if the gas channels are divergent. Divergent gas channels are recommended, because expansion of gas decreases its pressure which helps in efficient mixing.

The gas channels are designed so that the gas flowing through them swirls droplets in the mixing chamber. They are at an angle to its axis. Alternatively, the gas channels may be parallel to the axis of the mixing chamber.

In the atomizing chamber, a frontal surface of the lateral nozzle is perpendicular to its axis, or it is askew to this axis. In one embodiment the frontal surface of lateral nozzle is tilted towards to the outlet opening of the atomizing chamber, while in another embodiment it is tilted in the opposite direction, i.e. towards the central nozzle.

The tilt angle of the frontal surface of the lateral nozzle may vary between 0 and 60 degrees, but even higher angles are possible.

Additionally, at least one lateral nozzle has a rotation mechanism that enables it to rotate around its axis. The lateral nozzle is immobilized in selected position by a locking pin cooperating with a locking crown which ends the lateral conduit. The rotation mechanism with locking pin-crown unit is preferably applied in case of the lateral nozzle having tilted frontal surface.

Each lateral conduit and each lateral nozzle are suitable for transporting and atomizing gases or liquids, or suspensions, or powders. The invented aerodynamic multi-phase reactor may operate in any position, in particular it can be arranged horizontally or vertically.

A liquid, suspension or gas is fed through one or more of lateral nozzles, depending on the number of substances to be fed. Each substance is fed through one lateral nozzle and is forced to the nozzle by an appropriate transfer device, e.g. a pump or a compressor.

The lateral nozzles are the single-hole jet nozzles. The construction of the jet nozzle enables obtaining a very precise stream of the fed substance with a laminar flow which minimizes the flow resistance. The substance is administered at a low speed into the atomizing zone of gas leaving the central nozzle with high velocity. Besides of regulation of pressure of the atomizing gas, this makes it possible to control the size of generated droplets. The higher the gas velocity and its kinetic energy which is proportional to the square of the gas speed, the greater the fragmentation of the stream and, consequently, smaller droplets of the atomized fluids.

The lateral nozzles have a possibility of controlled rotation around their axis. On the outside of the nozzle, a locking pin is compatible with the notches in the locking crown of the nozzle holder, which allows the lateral nozzle to be rotated around its axis and locked, e.g. in steps of 30 degrees. Both the tilt setting of the lateral nozzle and the atomizing gas flow rate influence the diameter of the generated droplets.

By rotating the lateral nozzle around its axis, it is possible to change the effect the gas stream has on the liquid flowing from the lateral nozzle. It also makes it possible to control the mixing and optionally the chemical reaction through the time of contact of the mixed phases and the generated inter-phase area. The contact time of the gas and the nebulized substance is an important process characteristic that allows calculation of either the volume of the reactor or, as in this case, the flow rate of the atomizing gas carrying the droplets of the fed substance. The contact time of the phases in the reactor depends on the atomizing gas flow rate, and the contact surface depends on the size of the generated droplets.

The droplets generated at low flow rates of the fed substance have small diameters and travel at the speed of the atomizing gas. The higher the gas flow rate, the shorter the interaction time and the smaller the contact area produced in the reactor within a given time. Also, the larger the droplet diameter, the smaller the inter-phase area.

For the flat-face lateral nozzle, i.e. the one having a tilt of 0 degrees, its orientation relative to direction of the jet stream has no effect on spraying the substance, usually a liquid into droplets by the atomizing gas stream because it is independent of the angle of the nozzle rotation. Fragmentation of the fed substance flowing from the lateral nozzle into droplets occurs as a result of the action of shear forces in the turbulent stream of atomizing gas. Its kinetic energy is used in this process. The same principle applies for the lateral nozzles having tilted frontal surfaces.

As for the lateral nozzle having tilted frontal surface, the positioning is important due to the way the drop grows, which is then sheared and broken by the stream of flowing gas. For example, if the frontal surface faces the side opposite to the central nozzle, the liquid droplet formed has longer time to grow and then breaks down into smaller droplets. Such an arrangement causes that the growing drop is in the negative pressure zone created by the gas flowing at high speed on the edge of the lateral nozzle. On the other hand, if the lateral nozzle is positioned so that its frontal surface faces the central nozzle, i.e. in the overpressure zone, the liquid flowing from the lateral nozzle will have to overcome additional resistance caused by the stream of pressing gas. The frontal surface of the lateral nozzle creates a kind of obstacle for the atomizing gas and the drop is broken into smaller droplets only when it reaches beyond the edge of the nozzle. Then the gas stream impinges the drop and splits it into smaller droplets. The layers of liquid are peeled from the droplet and torn from it, and then broken into smaller droplets, which are transported with the gas stream towards the outlet of the atomizing chamber. This allows, in addition to controlling the flow rate and gas pressure, to control the droplet build-up process on the lateral nozzle and, therefore, further breakdown into smaller droplets.

The lateral nozzles must be placed in the zone of high velocity of the gas flowing through the central nozzle. Moving the lateral nozzle away from the central nozzle will place it outside the high velocity zone and the atomization will not be effective. Thus, the distance and positioning of the lateral nozzle with respect to the central nozzle is a key factor in atomization efficiency.

The size of the droplets formed on the frontal surface of the lateral nozzle depends on the flow rate of the liquid, while the size of the droplets carried in the stream of atomizing gas depends largely on its velocity: the larger it is, the smaller are the formed droplets. It should be noted that size of the generated droplets depends also on physicochemical parameters of the liquid, especially its viscosity. If the reactants enter the apparatus, the reaction can be controlled through their contact surface, which is directly related to the droplets size. The smaller the droplets, the larger the contact area and the greater the reaction efficiency.

The invented reactor enables:
- free and homogeneous mixing of substances present in different phases, i.e. liquid, gaseous and solid;
- simultaneous administration of substances through different nozzles and channels included in the reactor, without the need for additional dosing systems;
- generation of droplets from liquids, suspensions or their mixtures with gases;
- generation of droplets of specified average diameter;
- obtaining a specific droplet velocity;
- atomization of substances having different viscosities and surface tensions, including non-Newtonian liquids;
- feeding enrichment substances in the form of liquids to combustion systems;
- spray drying;
- spraying liquids with low flow rates;
- coating of various objects;
- fogging of supersonic aerodynamic chambers;
- conducting physical/chemical reactions.

The reactor according to the invention is characterized by a relatively simple and maintenance-free structure, no moving parts, and flexibility of dimensions. The device is designed for mixing by spraying with possibility of chemical/physical reaction of the fed substances in order to obtain two- and multi-component products. It is also suitable for use in spray drying processes.

The invented reactor may be applied in chemical technology and engineering, environmental protection, pharmaceutical industry, or food industry. It may be of interest to companies from the broadly understood chemistry, plastics processing, or energy sectors.

An embodiment of the invention is shown in the drawing, in which:
Fig. 1 is a schematic side view of an aerodynamic multi-phase reactor;
Fig. 2 shows a frontal view of the reactor;
Fig. 3 shows a vertical axial section of the reactor;
Fig. 4 shows a vertical section with a plane passing through the axes of the lateral nozzles;
Fig. 5 illustrates flat lateral nozzles oriented perpendicular to the central nozzle;
Fig. 6 shows askew lateral nozzles in different positions with respect to the central nozzle;
Fig. 7 shows a locking crown of a rotation mechanism of the lateral nozzle in a position determined by the position of the locking pin;
Fig. 8 in a frontal view shows setting the angular position of the lateral nozzle;
Fig. 9 shows a visualization of water sprayed through flat lateral nozzle;
Fig. 10 shows a visualization of water sprayed through askew lateral nozzle;
Fig. 11A is a graph of the droplet diameters obtained by spraying water through flat nozzle at gas pressure of 3 bar (the measurements of the droplet size distribution were carried out on a SPRAYTEC apparatus, for different velocities of the medium in the central nozzle and different viscosities of the media in the lateral nozzles), while

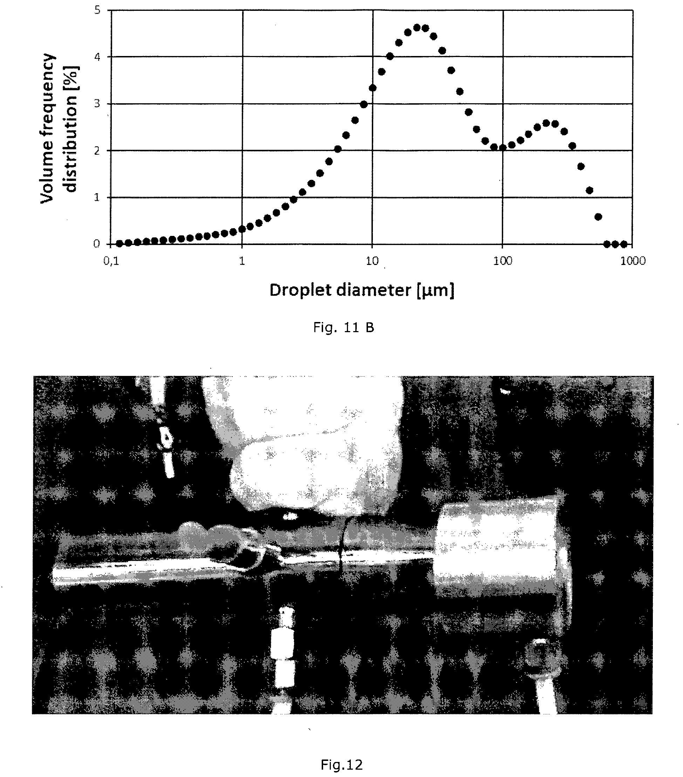

Fig. 11B is a cumulative distribution of the droplet size, and
Fig. 12 shows working model of the aerodynamic multi-phase reactor.

The aerodynamic multi-phase reactor in its embodiment comprises a gas supply part (1) and a mixing part (2). The gas supply part (1) is tubular and has a circular rim (12) or flange shaped upstream around the gas inlet (1a). At its downstream end the gas supply part (1) is joined with conical section of the mixing part (2) which further downstream is cylindrical.

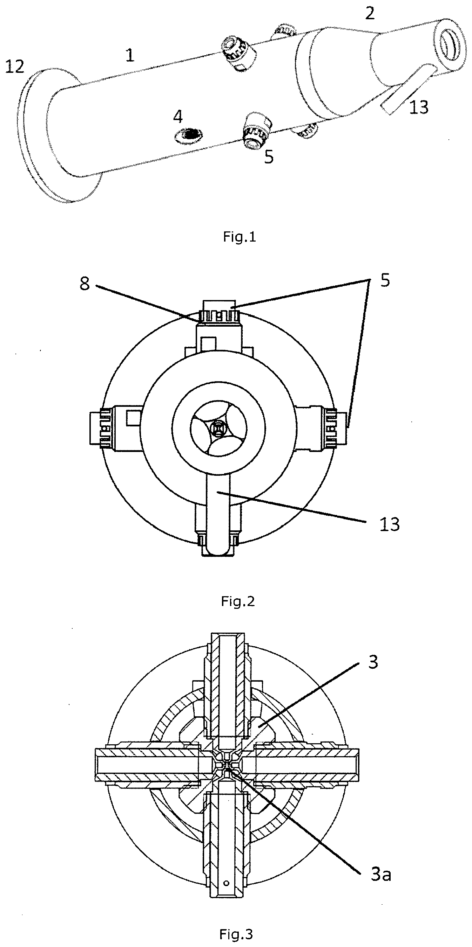

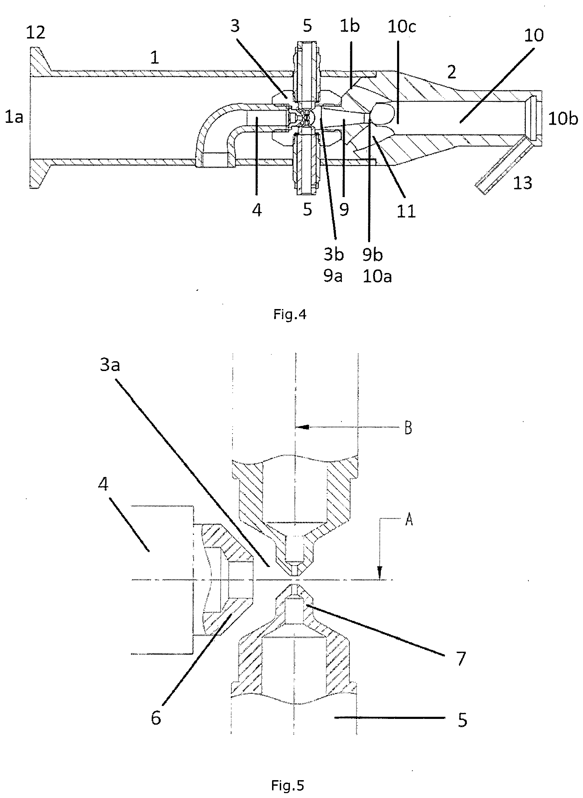

The gas supply part (1) has a gas inlet (1a) and four gas outlets (1b). It contains an atomizing chamber (3) which is fed with gas supplied by a central conduit (4), and which is also fed with additional substances supplied by four lateral conduits (5). All four lateral conduits (5) are visible on Figs. 1-3, while only two out of four gas outlets (1b) are shown on axial cross section on Fig. 4. The central conduit (4) begins in the side wall of the gas supply part (1), then turns at right angle towards the atomizing chamber (3) and ends in this chamber with a central nozzle (6).

Each lateral conduit (5) ends in the spray zone (3a) of the atomizing chamber (3) with a lateral nozzle (7) placed downstream and close to the central nozzle (6). An outlet opening (3b) of the atomizing chamber (3) is joined with an inlet opening (9a) of a mixing conduit (9) shaped in the mixing part (2). An outlet opening (9b) of the mixing conduit (9) is joined with an upstream inlet hole (10a) of a mixing chamber (10) shaped in the mixing part (2). Each gas outlet (1b) of the gas supply part (1) is joined with dedicated gas channel (11) shaped in the mixing part (2). There are four gas channels (11), two of them visible in Fig. 4, but all ending in the upstream part (10c) of the mixing chamber (10).

Optionally the reactor is provided with a catching system (13) of oversized droplets joined with a downstream part (10d) of the mixing chamber (10). In preferred embodiment the catching system (13) of oversized droplets is joined with a circumferencial groove (10e) shaped in the wall of the downstream part (10d) of the mixing chamber (10) close to a downstream outlet hole (10b).

The atomizing chamber (3) is placed centrally in the gas supply part (1). The mixing conduit (9) is convergent, so the speed of the mixture in the conduit is increased, and the pressure at its outlet is decreased. All four gas channels (11) are divergent. These two factors, i.e. convergent mixing conduit (9) and divergent gas channels (11) result in suction of gas supplied through the gas supply part (1). Therefore controlling only the gas supply enables precise control of the mixture composition, speed, pressure and temperature. This in turn makes possible controlling the chemical reactions, if any, in the mixing chamber (10). This is why the invented device is both the mixer and reactor.

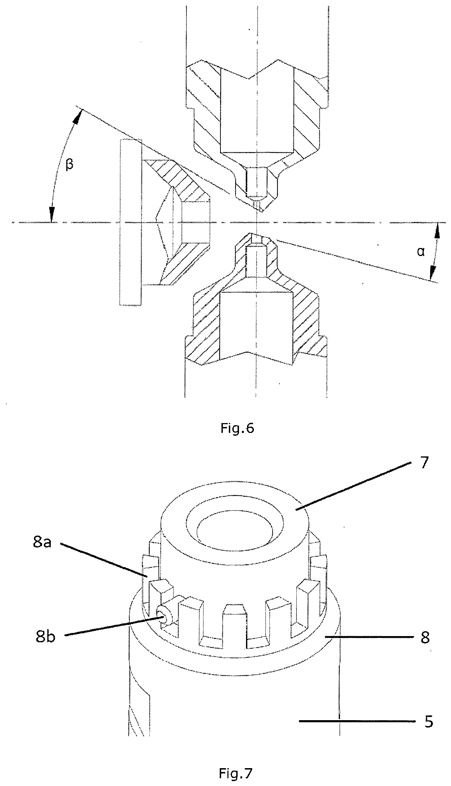

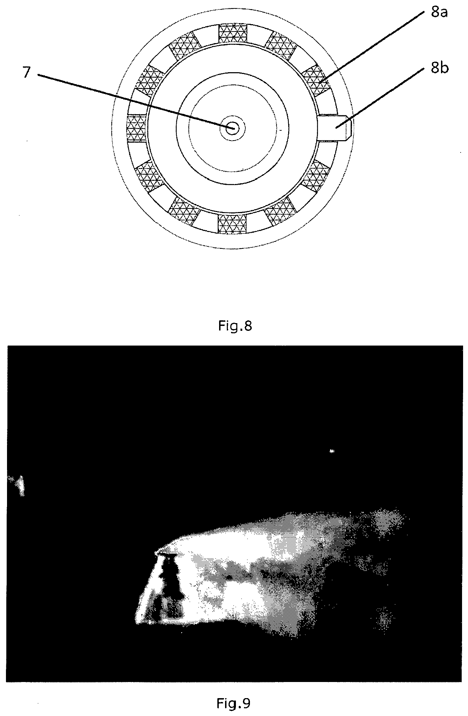

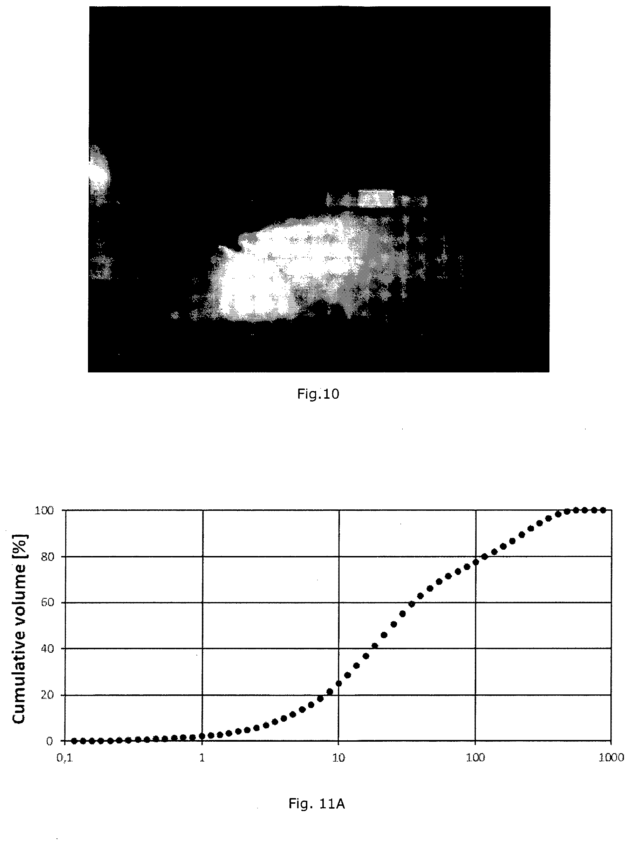

In one embodiment the frontal surface (14) of the lateral nozzle (7) is perpendicular to its axis (Fig. 5), and therefore it is called a flat nozzle. In another embodiment the frontal surface (14) of the lateral nozzle (7) is askew to its axis (Fig. 6). It can be tilted towards to the outlet opening (3b) of the atomizing chamber (3), or tilted in the opposite direction, i.e. towards the central nozzle (6). Fig. 9 shows formation of mist in case of flat nozzle while Fig. 10 shows creation of mist from askew nozzle tilted towards the outlet of the atomizing chamber (3). The central nozzle (6) can be seen to the left on both photographs, but the gas injected through the central nozzle remains invisible.

Each lateral conduit (5) and each lateral nozzle (7) are suitable for transporting and atomizing gases or liquids, or suspensions, or powders.

One lateral nozzle (7) has a rotation mechanism (8) that enables it to rotate around its axis. This is used for the askew nozzle. Precise selection of the angle of the lateral nozzle rotation defines the nozzle surface tilt in relation to the direction of the stream of gas injected through the central nozzle (6). By accurate setting of the lateral nozzle position one can regulate the droplets' size. The rotation mechanism (8) has a locking crown (8a) and a locking pin (8b).

The nozzle outlet diameter ranges from 0.1 to 2.0 mm and depends on the particle type and size, and substrate feeding capacity. In the tested reactor nozzles with a diameter of 0.3 mm and the speed of feeding the substrate up to 500 ml/h were used. The tested apparatus uses nozzles with a flat front and askew nozzles having a 15 and 30 degrees angle.

High viscosity of liquid and non-Newtonian properties generally inhibit the droplets formation, resulting in an increase in the mean droplet diameter and a decrease in the spray angle. The mixer-reactor is suitable for clean liquids and liquids containing solid particles, i.e. suspensions, but with particle diameters smaller than 1/3 of the inner nozzle hole diameter.

### Reference numbers

1 - gas supply part
1a - gas inlet of the gas supply part
1b - gas outlet of the gas supply part
2 - mixing part
3 - atomizing chamber
3a - spray zone of the atomizing chamber
3b - outlet opening of the atomizing chamber
4 - central conduit
5 - lateral conduit
6 - central nozzle
7 - lateral nozzle
8 - rotation mechanism of the lateral nozzle
8a - locking crown in the rotation mechanism of the lateral nozzle
8b - locking pin in the rotation mechanism of the lateral nozzle
9 - mixing conduit
9a - inlet opening of the mixing conduit
9b - outlet opening of the mixing conduit
10 - mixing chamber
10a - upstream inlet hole of the mixing chamber
10b - downstream outlet hole of the mixing chamber
10c - upstream part of the mixing chamber
10d - downstream part of the mixing chamber
10e - circumferencial groove in the mixing chamber
11 - gas channel
12-rim
13 - catching system
14 - frontal surface of lateral nozzle
α, β - the angles of inclination of the outlet plane of the side nozzle to the axis of the central nozzle

## Claims

1. An aerodynamic multi-phase reactor comprising a gas supply part (1) and a mixing part (2), **characterized in that** the gas supply part (1) has a gas inlet (1a) and at least one gas outlet (1b), and it contains an atomizing chamber (3) which is fed with a fluid supplied by a central conduit (4), and which is also fed with at least one additional substance supplied by at least one lateral conduit (5), the central conduit (4) ending in the atomizing chamber (3) with a central nozzle (6), and each lateral conduit (5) ending in the atomizing chamber (3) with a lateral nozzle (7) placed downstream and close to the central nozzle (6), and **in that** an outlet opening (3b) of the atomizing chamber (3) is joined with an inlet opening (9a) of a mixing conduit (9) shaped in the mixing part (2), and an outlet opening (9b) of the mixing conduit (9) is joined with an upstream inlet hole (10a) of a mixing chamber (10) shaped in the mixing part (2), and **in that** the gas outlet (1b) of the gas supply part (1) is joined with at least one gas channel (11) shaped in the mixing part (2) and ending in the upstream part (10c) of the mixing chamber (10).

2. The reactor according to claim 1, **characterized in that** the gas supply part (1) is tubular.

3. The reactor according to claim 1 or 2, **characterized in that** the gas supply part (1) has a rim (12) around the gas inlet (1a), preferably with the mounting bolt holes in the rim (12).

4. The reactor according to any of claims 1 to 3, **characterized in that** it is provided with a catching system (13) of oversized droplets joined with a downstream part (10d) of the mixing chamber (10).

5. The reactor according to claim 4, **characterized in that** the catching system (13) of oversized droplets is joined with a circumferential groove (10e) shaped in the wall of the downstream part (10d) of the mixing chamber (10) close to a downstream outlet hole (10b).

6. The reactor according to any of claims 1 to 5, **characterized in that** the atomizing chamber (3) is placed centrally in the gas supply part (1).

7. The reactor according to any of claims 1 to 6, **characterized in that** the mixing conduit (9) is convergent.

8. The reactor according to any of claims 1 to 7, **characterized in that** the gas channel (11) is divergent.

9. The reactor according to any of claims 1 to 8, **characterized in that** a frontal surface (14) of the lateral nozzle (7) is perpendicular to its axis.

10. The reactor according to any of claims 1 to 8, **characterized in that** a frontal surface (14) of the lateral nozzle (7) is askew to its axis.

11. The reactor according to claim 10, **characterized in that** the frontal surface (14) of lateral nozzle (7) is tilted towards the outlet opening (3b) of the atomizing chamber (3).

12. The reactor according to claim 10, **characterized in that** the frontal surface (14) of lateral nozzle (7) is tilted towards the central nozzle (6).

13. The reactor according to any of claims 1 to 12, **characterized in that** each lateral conduit (5) and each lateral nozzle (7) are suitable for transporting and atomizing gases or liquids, or suspensions, or powders.

14. The reactor according to any of claims 1 to 13, **characterized in that** at least one lateral nozzle (7) has a rotation mechanism (8) that enables it to rotate around its axis.

15. The reactor according to claim 14, **characterized in that** the rotation mechanism (8) has a locking crown (8a) and a locking pin (8b).
